# EUROPÄISCHE PATENTSCHRIFT

(11) **EP 0 414 871 B1**
(45) Veröffentlichungstag und Bekanntmachung des Hinweises auf die Patenterteilung: **09.06.1993**
(21) Anmeldenummer: 90904295.4
(22) Anmeldetag: 15.03.1990
(51) Int. Cl.: G01L 9/12

(54) **KAPAZITIVER DRUCKSENSOR UND VERFAHREN ZU SEINER HERSTELLUNG**
CAPACITIVE PRESSURE SENSOR, AND PROCESS FOR THE MANUFACTURE OF THE SAME
CAPTEUR CAPACITIF DE PRESSION ET SON PROCEDE DE PRODUCTION

(30) Priorität: 21.03.1989 DE 3909185
(43) Veröffentlichungstag der Anmeldung: 06.03.1991
(73) Patentinhaber: ENDRESS U. HAUSER GMBH U. CO., D-79689 Maulburg (DE)
(72) Erfinder: HEGNER, Frank, D-7864 Maulburg (DE); FRANK, Manfred, D-7864 Maulburg (DE)
(74) Vertreter: Morstadt, Volker, Dipl.-Ing.
(86) Internationale Anmeldenummer: EP9000418
(87) Internationale Veröffentlichungsnummer: WO9011502

(56) Entgegenhaltungen:
- EP-A- 0 024 945
- US-A- 4 345 299
- US-A- 4 424 713
- US-A- 4 581 676

## Beschreibung

Die Erfindung besteht in einem kapazitiven Drucksensor mit den Merkmalen des Anspruchs 1 und in einem Verfahren zu dessen Herstellung mit den Merkmalen des Anspruchs 3.

Aufgabe der Erfindung ist die Schaffung eines Drucksensors, der sehr robust und insb. nicht temperaturschock-empfindlich ist und dessen Aluminiumoxid-Keramikteile, die insb. einen Reinheitsgrad von 96% haben, in einfacher Weise zusammengefügt sind, sowie die Schaffung eines Verfahrens zur Herstellung eines solchen Drucksensors.

Aus der US-A-4 345 299 ist ein kapazitiver Drucksensor mit einer Membran und einem Grundkörper aus Keramik bekannt, die mittels einer Zwischenschicht aus Dickschicht-Glasfrittenpaste parallel zueinander zusammengefügt sind und eine abgeschlossene Kammer bilden. Die Kondensatorelektroden sind dabei metallisiert und zur Rückseite des Grundkörpers hin kontaktiert.

Aus der US-A 45 81 676 ist ein kapazitiver Drucksensor bekannt, dessen dünne Membran von gleichmäßiger Dicke in einem dickeren einkristallinen Siliciumkörper durch Ausätzen gebildet ist, also nicht aus Aluminiumoxid-Keramik besteht. Anstatt eines Grundkörpers hat dieser Drucksensor zwei Elektrodenträgerplatten aus Silicium, die mit dem Menbrankörper mittels eines Borsilikatglas-Lots, also nicht mittels einer Leit- oder einer Widerstandspaste, zusammengefügt sind und zu deren jeweiliger Rückseite hin Durchführungen existieren. Diese werden erst nach dem Zusammenfügen in die Elektrodenträgerplatten gebohrt und sind mit Dickschichten als Leitschichten versehen. Die Elektroden des Drucksensors sind in Form von Dünnschichten, wie in der Halbleitertechnik üblich, gebildet.

Drucksensoren nach der Erfindung zeichnen sich durch hohe mechanische Festigkeit, Belastbarkeit und Temperaturwechselbeständigkeit sowie, falls erforderlich, durch eine sehr gute und sehr sichere Vakuumdichtheit bei einfachem Fertigungsverfahren aus. Es ist nämlich nur ein einziger Brennschritt erforderlich. Die Membran ist im übrigen ohne mechanische Störstellen gleichmässig mit dem Grundkörper an der Fügestelle verbunden. Da diese leitend ist, ist auch eine gute Membrankontaktierung gewährleistet.

Es ist völlig überraschend, dass die in der Siebdrucktechnik zur Herstellung von Dickschichtschaltungen für Leitbahnen und Widerstände verwendeten Pasten gerade auch zur Fügung von Aluminiumoxid-Keramikteilen von Drucksensoren geeignet sind. Bei den nach der Erfindung hergestellten Drucksensoren konnten in einem grossen Temperaturbereich keine nachteiligen Auswirkungen auf das Sensorverhalten, wie Kriechen, Hysterese oder Empfindlichkeitsänderungen, festgestellt werden.

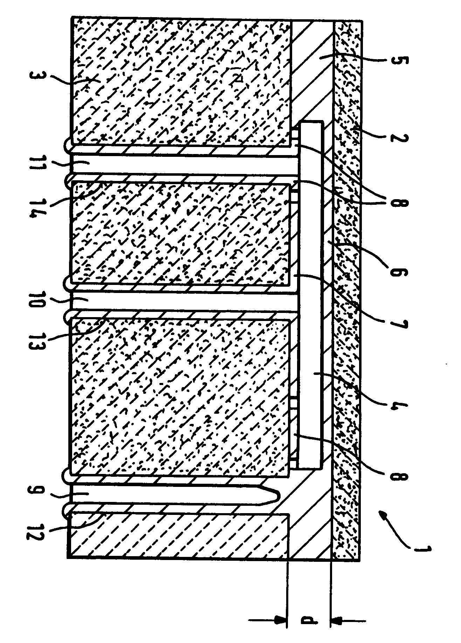

Weitere Merkmale und Vorteile der Erfindung ergeben sich aus der folgenden Beschreibung der Figur der Zeichnung, die schematisch im Schnitt ein Ausführungsbeispiel zeigt.

Der in der Figur dargestellte Drucksensor 1 hat die Membran 2 in Form einer kreisrunden Scheibe mit planparallelen Flächen, die rings um den Umfang mit dem kreisrunden Grundkörper 3 in einem definierten Abstand d zusammengefügt ist, so dass zwischen der ebenen Oberseite des Grundkörpers 3 und der gegenüberliegenden Fläche der Membran 2 die Kammer 4 gebildet ist.Die Membran 2 und der Grundkörper 3 sind Aluminiumoxid-Keramikteile. Die Membran 2 ist elastisch, so dass sie sich unter einem darauf einwirkenden Druck verformen kann. Der Grundkörper 3 kann massiv und starr sein, er kann aber auch, falls erwünscht, in gleicher Weise wie die Membran 2 als flache elastische Scheibe ausgebildet sein. Mittels der Zwischenschicht 5 sind Membran 2 und Grundkörper 3 mechanisch fest miteinander verbunden.

An den einander zugewandten Flächen der Membran 2 bzw. des Grundkörpers 3 sind innerhalb der Kammer 4 kreisförmige bzw. kreisringförmige Leitschichten 6, 7, 8 angebracht, die sich gegenüberliegen. Im Grundkörper 3 sind die Bohrungen 9, 10, 11 angebracht, über die die Leitschichten 6, 7, 8 elektrisch kontaktiert sind. Die beiden Leitschichten 6, 7 bilden die Elektroden eines ersten Kondensators und die beiden Leitschichten 6, 8 die eines zweiten Kondensators, deren Kapazitäten vom Abstand zwischen den Leitschichten abhängt. Wenn sich die Membran 2 unter der Einwirkung eines Drucks verformt, ändert sich der Abstand zwischen den beiden Leitschichten 6, 7 bzw. 6, 8 und damit die Kapazitäten des Drucksensors. Diese können mittels einer an die Metallisierungen in den Bohrungen 9, 10, 11 angeschlossenen elektronischen Schaltung gemessen werden und dienen daher als Mass für den auf die Membran 2 einwirkenden Druck.

Die Besonderheit des dargestellten Drucksensors besteht in der Art und Weise, wie die Zwischenschicht 5 und die Leitschichten 6, 7, 8 ausgebildet und wie letztere kontaktiert sind, nämlich durch die die Bohrungen 9, 10, 11 auskleidenden Kontaktierungsschichten als Durchführungen 12, 13, 14, die am äusseren Bohrungsende z.B. geringfügig auf die untere Fläche des Grundkörpers 3 übergreifen. Als Material für alle diese leitenden Beschichtungen dient eine Leitpaste oder eine Widerstandspaste mit einem Flächenwiderstand von höchstens 1 Ohm/Quadrat, vorzugsweise jeweils eine Paste mit derselben Zusammensetzung für alle Schichten, wobei die Leitpaste zweckmässigerweise glasfrei ist.

Somit ist die Leitschicht 6 des oberen, gemeinsamen Kondensatorbelags über die Zwischenschicht 5 und die Durchführung 12 zur Rückseite des Grundkörpers 3 hin kontaktiert. Die Leitschicht 7 des zweiten Belags des oben erwähnten ersten Kondensators ist über die Durchführung 13, die Leitschicht 8 des zweiten Belags des zweiten Kondensators über die Durchführung 14 kontaktiert. Die elektrische Verbindung zu der erwähnten Messschaltung kann z.B. durch Anlöten von Leitungen an die erwähnten überstehenden Enden der Schichten 12, 13, 14 oder durch direktes Aufsetzen und Kontaktieren von Anschlüssen elektronischer Bauelemente erfolgen.

Der Drucksensor 1 lässt sich aufgrund des beschriebenen Aufbaus äusserst einfach und kostengünstig herstellen. So wird mittels der in der Siebdrucktechnik von Dickschichtschaltungen bekannten Druckschablonen zunächst die Paste auf alle vorgesehenen Flächen in einer für deren Metallisierung und Kontaktierung ausreichenden Dicke durch die Oeffnungen einer entsprechenden ersten Maske aufgedruckt. Zugleich wird die Paste in die Bohrungen eingedrückt oder, wenn dies wegen der Dicke des Keramikteils und des gewählten Bohrungsdurchmessers nicht möglich sein sollte, unter Anwendung von Unterdruck in die Bohrungen eingesaugt. Nach Entfernen der Druckschablone wird die aufgedruckte Paste getrocknet.

Danach wird mittels einer zweiten Maske entsprechender Dicke der restliche für die Gesamtdicke d der Zwischenschicht 5 erforderliche Teil an Paste aufgedruckt. Nach allfälligem erneuten Trocknen werden Membran und Grundkörper durch das übliche Brennen zusammengefügt.

Die Haftung von Widerstandspaste an den und zwischen den Aluminiumoxid-Keramikteilen ist typisch etwa 70 N/mm² im Vergleich zu etwa 30 N/mm² bei reiner Glasfritte.

## Patentansprüche

1. Kapazitiver Drucksensor (1) mit einer Membran (2) und einem Grundkörper (3), die
- Aluminiumoxid-Keramikteile, insbesondere mit einer Reinheit von 96%, sind,
- unter Bildung einer, insbesondere abgeschlossenen, Kammer (4) in einem definierten Abstand (d) mittels einer Zwischenschicht (5) parallel zueinander zusammengefügt sind und
- ebene, zur Bildung mindestens eines Kondensators mit mindestens einer Leitschicht (6, 7, 8) versehene Innenflächen aufweisen, die mittels Durchführungen (12, 13, 14) zur Rückseite des Grundkörpershin elektrisch kontaktiert sind,
- wobei die Leitschichten (6, 7, 8), die Durchführungen (12, 13, 14) und die Zwischenschicht (5) aus einer Leitpaste oder aus einer nierderohmigen Widerstandspaste mit einem Flächenwiderstand von höchstens 1 Ohm/Quadrat, die in Siebdrucktechnik aufgebracht sind, ausgebildet sind.

2. Drucksensor nach Anspruch 1, bei dem die Leitpaste keinen Glasanteil enthält.

3. Verfahren zum Herstellen eines Drucksensors nach Anspruch 1 oder 2, bei dem
- die Paste auf die für die Zwischenschicht (5) und die Leitschichten vorgesehenen Flächen in für letztere ausreidrende Dicke ausgedruckt und in für die Durchführungen vorgesehene Bohrungen (9, 10, 11) gedrückt oder unter Unterdruck eingesaugt wird,
- nach Trocknen der aufgebrachten Paste die erforderliche Dicke (d) der Zwischenschicht (5) durch weiteres Aufdrucken von Paste im Bereich der Zwischenschicht erzeugt wird und
- nach erneutem Trocknen der Paste die beschichteten Keramikteile aufeinandergebracht und gebrannt werden.

4. Verfahren nach Anspruch 3, bei dem eine Paste einheitlicher Zusammensetzung verwendet wird.

## Claims

1. A capacitive pressure sensor (1) comprising a diaphragm (2) and a substrate (3) which
- are alumina-ceramic parts, particularly with a purity of 96%,
- are joined together in a defined spaced relationship (d) and parallel to each other by means of an intermediate layer (5), forming a chamber (4), particularly a closed chamber, and
- have flat inner surfaces which are provided with at least one conductive layer (6, 7, 8) for forming at least one capacitor and are electrically connected to the rear side of the substrate by means of through-hole coatings (12, 13, 14),
- the conductive layers (6, 7, 8), the through-hole coatings (12, 13, 14), and the intermediate layer (5) being formed by applying a conductive paste or a low-resistivity paste with a sheet resistivity not higher than 1 ohm/square by silk-screening techniques.

2. A pressure sensor as claimed in claim 1 wherein the conductive paste contains no glass.

3. A method of manufacturing a pressure sensor as claimed in claim 1 or 2 wherein
- the paste is printed on the areas intended for the intermediate layer (5) and the conductive layers in a thickness suitable for the latter, and forced into holes (9, 10, 11) provided for the through-hole coatings or drawn into said holes by applying vacuum,
- after the applied paste has been dried, the necessary thickness (d) of the intermediate layer (5) is produced by printing additional paste in the area of the intermediate layer, and
- after the paste has been dried again, the coated ceramic parts are put one on top of the other and fired.

4. A method as claimed in claim 3 wherein a paste of uniform composition is used.

## Revendications

1. Capteur de pression capacitif (1) comportant une membrane (2) et un corps de base (3),
- qui sont des pièces en céramique d'oxyde d'aluminium, notamment d'une pureté de 96 %,
- qui sont réunis parallèlement l'un à l'autre, à une distance définie (d) l'un de l'autre, au moyen d'une couche intermédiaire (5), en formant une chambre (4) notamment fermée, et
- qui, pour la réalisation d'au moins un condensateur, présentent des surfaces intérieures planes pourvues d'au moins une couche conductrice (6, 7, 8) et situées en contact électrique avec le côté arrière du corps de base au moyen de passages (12, 13, 14),
- les couches conductrices (6, 7, 8), les passages (12, 13, 14) et la couche intermédiaire (5) étant réalisés en une pâte conductrice ou en une pâte résistante à faible résistance avec une résistance de surface d'au plus 1 ohm/carré, qui sont appliquées par une technique de sérigraphie.

2. Capteur de pression selon la revendication 1, dans lequel la pâte conductrice ne renferme pas de verre.

3. Procédé de fabrication d'un capteur de pression selon la revendication 1 ou 2, selon lequel
- la pâte est appliquée sur les surfaces prévues pour la couche intermédiaire (5) et les couches conductrices, selon une épaisseur suffisante pour ces dernières, et la pâte est pressée ou aspirée sous dépression dans des perçages (9, 10, 11) prévus pour les passages,
- après séchage de la pâte appliquée, on réalise l'épaisseur (d) nécessaire de la couche intermédiaire (5) par une nouvelle application de pâte dans la sone de la couche intermédiaire, et
- après un nouveau séchage de la pâte, les pièces en céramique revêtues sont appliquées l'une sur l'autre et subissent une cuisson.

4. Procédé selon la revendication 3, selon lequel on utilise une pâte de composition unique.
